# FASCICULE DE BREVET EUROPEEN

(11) **EP 3 828 898 B1**
(45) Date de publication et mention de la délivrance du brevet: **20.03.2024**
(21) Numéro de dépôt: 20208985.0
(22) Date de dépôt: 20.11.2020
(51) Int. Cl.: G21F 5/12, G21F 7/047, B25J 21/02

(54) **ENCEINTE DE CONFINEMET DU TYPE BOÎTE À GANTS**
SICHERHEITSBEHÄLTER VOM TYP HANDSCHUHKASTEN
GLOVE BOX-TYPE CONTAINMENT ENCLOSURE

(30) Priorité: 28.11.2019 FR 1913354
(43) Date de publication de la demande: 02.06.2021
(73) Titulaire: Commissariat à l'énergie atomique et aux énergies alternatives, 75015 Paris (FR)
(72) Inventeur: BOITEUX, Olivier, 21120 IS SUR TILLE (FR)
(74) Mandataire: Brevalex

(56) Documents cités:
- EP-A1- 0 371 307
- WO-A1-2016/180839
- US-A- 3 682 208
- US-A- 5 425 479

## Description

### DOMAINE TECHNIQUE

La présente invention se rapporte aux enceintes de confinement du type boîte à gants et notamment aux enceintes de confinement du type boîte à gants mises en oeuvre dans les domaines d'activités nucléaires, chimiques, bactériologiques, médicales ou encore pharmaceutiques.

En particulier, l'invention concerne la mise en oeuvre d'une interface permettant de changer et/ou remplacer des équipements sans rupture de confinement.

### ÉTAT DE LA TECHNIQUE ANTÉRIEURE

Les enceintes de confinement du type boîte à gants sont largement utilisées dans les domaines d'activités nucléaires, chimiques, bactériologiques, médicales ou encore pharmaceutiques.

Ces enceintes comprennent en général des équipements, et notamment des moyens d'accès tels que des portes.

En particulier, ces équipements sont fixés sur une paroi de l'enceinte par soudage ou par des moyens de serrage, par exemple des boulons, qui traversent la paroi considérée.

Un joint doit également être mis en oeuvre afin d'assurer l'étanchéité entre l'équipement et la paroi sur laquelle il est fixé.

Cependant, cet agencement n'est pas satisfaisant.

En effet, en cas de défaillance de l'équipement, le remplacement de ce dernier requiert une intervention longue et coûteuse au cours de laquelle l'enceinte reste indisponible.

En particulier, le remplacement de l'équipement nécessite de démonter la paroi sur laquelle est fixé l'équipement, et par voie de conséquence rompre le confinement.

Le document WO 2016/180839 A1 divulgue une enceinte de confinement du type boîte à gants selon l'état de la technique antérieure.

Ainsi, un but de la présente invention est de proposer une enceinte de confinement du type boîte à gants pourvue d'au moins un équipement dont le remplacement peut être effectué sans rupture de confinement.

### EXPOSÉ DE L'INVENTION

Le but de l'invention est atteint par une enceinte de confinement du type boîte à gants pourvue d'un équipement mécaniquement solidaire d'une paroi de ladite enceinte au moyen d'une première bride, ledit équipement et la première bride obstruant de manière hermétique une ouverture ménagée au niveau de ladite paroi,
la première bride comprenant une section cylindrique, formant un passage, pourvue d'un premier bord libre, et d'un second bord, opposé au premier bord, et à partir duquel s'étend un épaulement, la première bribe traversant l'ouverture de sorte que l'épaulement soit maintenu en appui contre une face interne de la paroi, et de sorte que la section cylindrique soit en projection vers l'extérieur de l'enceinte,
l'équipement, pourvu d'une seconde bride, traversant le passage et débouchant à l'intérieur de l'enceinte, la seconde bride étant serrée en appui contre le premier bord.

Selon un mode de mise en oeuvre, le maintien serré de la seconde bride contre le premier bord est assuré par une bague de serrage.

Selon un mode de mise en oeuvre, la bague de serrage est vissée autour de l'équipement à l'intérieur de l'enceinte de confinement.

Selon un mode de mise en oeuvre, la bague de serrage est en appui contre le second bord.

Selon un mode de mise en oeuvre, un joint est intercalé entre le premier bord et le second épaulement.

Selon un mode de mise en oeuvre, le maintien de la première bride à la paroi est assuré par un cordon de soudure formé au niveau de l'épaulement.

Selon un mode de mise en oeuvre, la section cylindrique comprend une surface externe sur laquelle sont formées deux gorges circonférentielles.

Selon un mode de mise en oeuvre, l'équipement est une porte d'accès à ladite enceinte.

### BRÈVE DESCRIPTION DES DESSINS

D'autres caractéristiques et avantages apparaîtront dans la description qui va suivre d'une enceinte de confinement du type boîte à gants selon l'invention, donnés à titre d'exemples non limitatifs, en référence aux dessins annexés dans lesquels :
La figure 1 est une représentation schématique partielle selon un plan de coupe d'une enceinte de confinement du type boîte à gants au niveau d'une ouverture formée dans une paroi de ladite enceinte, et sur laquelle est disposée une interface selon la présente invention ;
La figure 2 est une représentation schématique partielle selon un plan de coupe d'une enceinte de confinement du type boîte à gants au niveau de l'ouverture formée dans la paroi, et sur laquelle sont disposées une interface et une porte d'accès selon la présente invention ;
La figure 3 est une représentation schématique selon un plan de coupe de l'interface selon la présente invention.

### EXPOSÉ DÉTAILLÉ DE MODES DE RÉALISATION PARTICULIERS

La présente invention concerne une enceinte de confinement du type boîte à gants, et plus particulièrement la mise en oeuvre d'une interface permettant de fixer mécaniquement et de manière étanche un équipement sur une paroi de ladite interface.

L'interface selon la présente invention permet en particulier de remplacer, sans rupture de confinement, l'équipement logé à l'intérieur de l'enceinte de confinement.

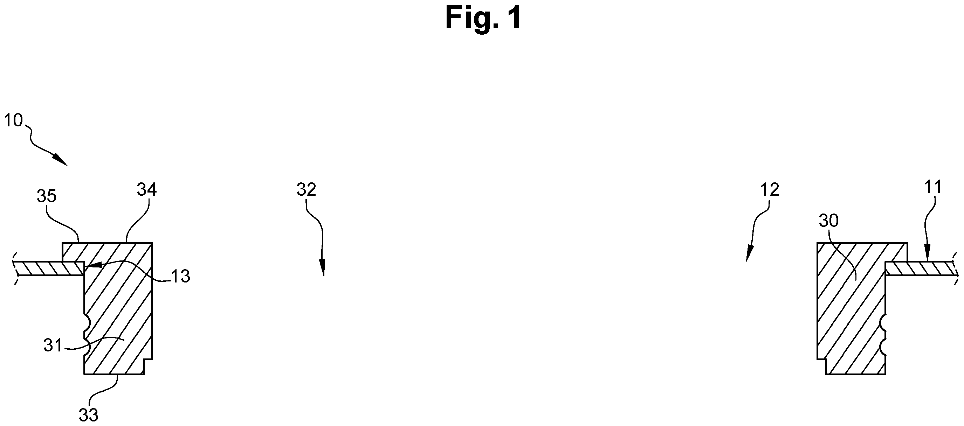

La figure 1 est une représentation schématique partielle selon un plan de coupe d'une enceinte de confinement 10 selon la présente invention.

L'enceinte de confinement 10 est une boîte à gants.

L'enceinte de confinement 10 délimite, via les parois qui la composent, un volume de confinement V.

L'enceinte de confinement 10 comprend notamment une paroi 11 au niveau de laquelle est ménagée une ouverture 12 délimitée par un contour 13.

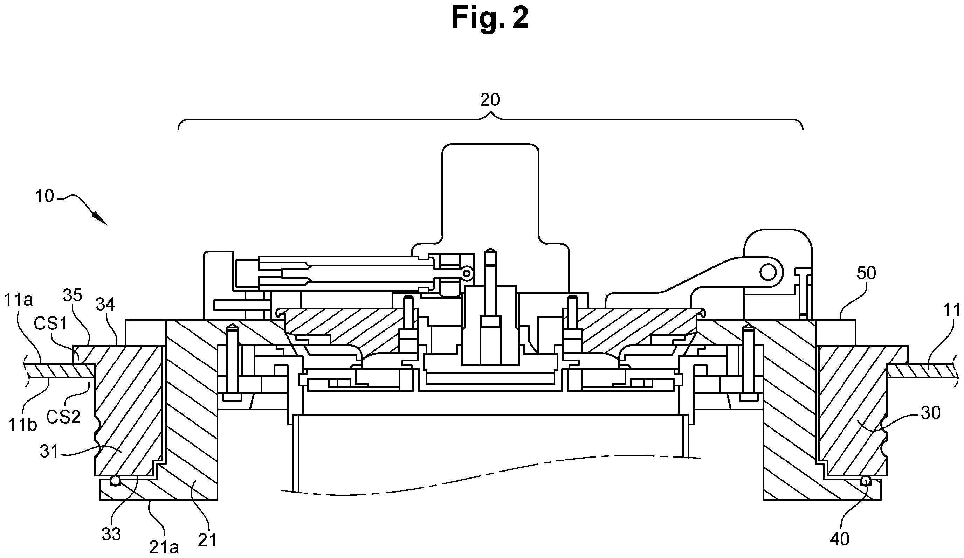

L'enceinte de confinement 10 est également pourvue d'un équipement 20 maintenu mécaniquement sur la paroi 11 au moyen d'une première bride 30 (figure 2).

Tel que représenté à la figure 2, l'équipement peut comprendre un moyen d'accès, par exemple une porte, au volume de confinement V de l'enceinte de confinement 10.

Toutefois, la présente invention ne doit pas être limitée à ce seul aspect, et peut concerner tout type d'équipement, et notamment, un appareil, par exemple un four, une balance ...

Par ailleurs, l'équipement 20 et la première bride 30 obstruent de manière hermétique l'ouverture 12 ménagée au niveau de la paroi 11.

La première bride 30 comprend avantageusement un matériau métallique, et en particulier de l'aluminium ou de l'acier.

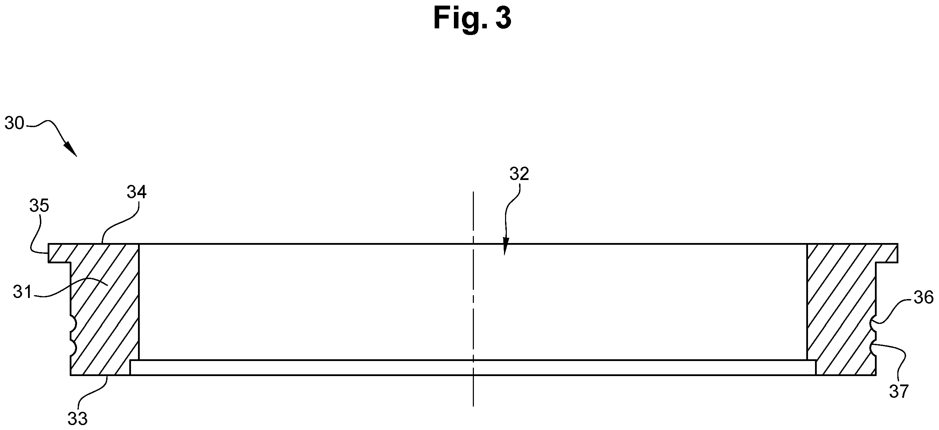

Tel que représenté à la figure 3, la première bride 30 comprend une section cylindrique 31, formant un passage 32, pourvue d'un premier bord 33 libre, et d'un second bord 34, opposé au premier bord, et à partir duquel s'étend un épaulement 35. Il est entendu sans qu'il soit nécessaire de le préciser que l'épaulement 35 s'étend de manière radiale à la première bride. En d'autres termes l'épaulement 35 forme un élargissement de la première bride.

La première bride 30 est en particulier agencée de manière à traverser l'ouverture 12 de sorte que l'épaulement soit maintenu en appui contre une face interne 11a de la paroi, et de sorte que la section cylindrique 31 soit en projection vers l'extérieur de l'enceinte de confinement 10 (figures 1 et 2).

Le maintien à la paroi 11 de la première bride 30 peut être assuré par un premier cordon de soudure CS1 formé par exemple sur tout le pourtour de l'épaulement 35. Un deuxième cordon de soudure CS2 peut également être formé sur une face externe 11b de la paroi 11.

La surface externe de la première bride peut également comprendre deux gorges circonférentielles 36 et 37 (figure 3).

L'équipement 20 est pourvu d'une seconde bride 21 également terminée par un de ses bords par un épaulement, dit deuxième épaulement 21a.

Par ailleurs, tel que représenté à la figure 2, l'équipement traverse le passage 32 et débouche à l'intérieur de l'enceinte. En particulier, le second épaulement 21a est serré en appui contre le premier bord 33. Les surfaces en contact du second épaulement 21a et du premier bord 33 sont avantageusement essentiellement planes.

Par ailleurs, afin d'assurer une étanchéité optimale, un joint 40 peut être intercalé entre le premier bord 33 et le second épaulement 21a.

De manière particulièrement avantageuse, le maintien serré de la seconde bride 21 contre le premier bord 33 est assuré par une bague de serrage 50.

La bague de serrage 50 est vissée autour de l'équipement à l'intérieur de l'enceinte de confinement et en particulier autour d'une section de la seconde bride 21 émergeant dans le volume interne de l'enceinte de confinement 10.

Selon cet agencement, la bague de serrage est donc en appui contre le second bord 34.

Ainsi, la bague de serrage 50, telle qu'agencée, permet un écrasement homogène du joint 40 intercalé entre le premier bord 33 et le second épaulement 21a, et garantit ainsi une étanchéité optimale.

Par ailleurs, la mise en oeuvre de la première bride 30 selon la présente invention permet de changer/remplacer l'équipement 20, lorsque ce dernier est défectueux par exemple, sans rupture de confinement.

En outre, le changement d'équipement lorsque la première bride est mise en oeuvre ne nécessite pas d'immobiliser l'enceinte de confinement sur une longue durée.

À cet égard, le changement d'équipement peut impliquer les étapes suivantes :
a) procéder à un assainissement du volume intérieur de l'enceinte de confinement, en particulier au voisinage de l'équipement à remplacer,
b) préparer un capot de protection muni d'une vanne et d'un filtre et le rentrer sous vinyle étanche dans l'enceinte de confinement,
c) positionner un sac vinyle sur l'une ou l'autre des gorges circonférentielles de la première bride,
d) maintenir en place l'équipement à changer par un plateau élévateur disposé sous l'enceinte de confinement,
e) desserrer et retirer la bague de serrage à l'intérieur de la boite à gants,
f) mettre en place le capot de protection et le maintenir par une fixation adaptée,
g) descendre le plateau élévateur pour introduire l'équipement à remplacer dans le sac vinyle,
h) souder de manière étanche le sac vinyle, et ainsi évacuer l'équipement à remplacer,
i) décontaminer le passage de la première bride et l'intérieur du capot de protection par des changements successifs de sac et l'utilisation de produits de décontamination ;
j) retirer le sac de confinement,
k) présenter l'équipement de remplacement muni de son joint et l'introduire dans l'interface, au moyen du plateau élévateur;
l) retirer le capot de protection,
m) remettre en place la bague de serrage et comprimer le joint.

Cette intervention, simple, qui permet ainsi le remplacement de l'équipement sans rupture de confinement, n'immobilise l'enceinte de confinement que sur une courte durée.

## Revendications

1. Enceinte de confinement (10) du type boîte à gants pourvue d'un équipement (20) mécaniquement solidaire d'une paroi (11) de ladite enceinte au moyen d'une première bride (30), ledit équipement (20) et la première bride (30) obstruant de manière hermétique une ouverture (12) ménagée au niveau de ladite paroi (11), la première bride (30) comprenant une section cylindrique (31), formant un passage (32), pourvue d'un premier bord (33) libre, et d'un second bord (34), opposé au premier bord (33), et à partir duquel s'étend un épaulement (35), la première bride traversant l'ouverture (12) de sorte que l'épaulement (35) soit maintenu en appui contre une face interne de la paroi (11), et de sorte que la section cylindrique (31) soit en projection vers l'extérieur de l'enceinte,
l'équipement (20), pourvu d'une seconde bride (21), traverse le passage (32) et débouche à l'intérieur de l'enceinte, la seconde bride comprenant un second épaulement (21a) serré en appui contre le premier bord (33).

2. Enceinte selon la revendication 1, dans laquelle le maintien serré de la seconde bride contre le premier bord (33) est assuré par une bague de serrage (50).

3. Enceinte selon la revendication 2, dans laquelle la bague de serrage est vissée autour de l'équipement (20) à l'intérieur de l'enceinte de confinement (10).

4. Enceinte selon la revendication 3, dans laquelle la bague de serrage est en appui contre le second bord (34).

5. Enceinte selon l'une des revendications 1 à 4, dans laquelle un joint (40) est intercalé entre le premier bord (33) et le second épaulement (21a).

6. Enceinte selon l'une des revendications 1 à 5, dans laquelle le maintien de la première bride (30) à la paroi (11) est exécuté par un cordon de soudure formé au niveau de l'épaulement (35).

7. Enceinte selon l'une des revendications 1 à 6, dans laquelle la section cylindrique (31) comprend une surface externe sur laquelle sont formées deux gorges circonférentielles.

8. Enceinte selon l'une des revendications 1 à 7, dans laquelle l'équipement (20) est une porte d'accès à ladite enceinte.

## Patentansprüche

1. Sicherheitsbehälter (10) vom Typ Handschuhkasten, der mit einer Einrichtung (20) ausgestattet ist, die mittels eines ersten Flansches (30) mechanisch an einer Wand (11) des Behälters befestigt ist, wobei die Einrichtung (20) und der erste Flansch (30) eine Öffnung (12) hermetisch abdichten, die an der Wand (11) ausgebildet ist, wobei der erste Flansch (30) einen zylindrischen Abschnitt (31) umfasst, der einen Durchgang (32) bildet, der mit einer ersten freien Kante (33) und einer zweiten Kante (34) gegenüber der ersten Kante (33) versehen ist und von dem sich eine Schulter (35) erstreckt, wobei der erste Flansch durch die Öffnung (12) verläuft, so dass die Schulter (35) in Anlage an einer Innenfläche der Wand (11) gehalten wird und so dass der zylindrische Abschnitt (31) zur Außenseite des Behälters hin vorsteht,
wobei die Einrichtung (20), die mit einem zweiten Flansch (21) versehen ist, durch den Durchgang (32) verläuft und ins Innere des Behälters mündet, wobei der zweite Flansch eine zweite Schulter (21a) umfasst, die gegen die erste Kante (33) festgehalten wird.

2. Behälter nach Anspruch 1, wobei das Festhalten des zweiten Flansches gegen die erste Kante (33) durch einen Klemmring (50) gewährleistet ist.

3. Behälter nach Anspruch 2, wobei der Klemmring um die Einrichtung (20) innerhalb des Sicherheitsbehälters (10) aufgeschraubt ist.

4. Behälter nach Anspruch 3, wobei der Klemmring an der zweiten Kante (34) anliegt.

5. Behälter nach einem der Ansprüche 1 bis 4, wobei zwischen der ersten Kante (33) und der zweiten Schulter (21a) eine Dichtung (40) eingesetzt ist.

6. Behälter nach einem der Ansprüche 1 bis 5, wobei das Beibehalten des ersten Flansches (30) an der Wand (11) durch eine auf Höhe der Schulter (35) ausgebildete Schweißnaht ausgeführt wird.

7. Behälter nach einem der Ansprüche 1 bis 6, wobei der zylindrische Abschnitt (31) eine Außenfläche umfasst, auf der zwei Umfangsnuten ausgebildet sind.

8. Behälter nach einem der Ansprüche 1 bis 7, wobei die Einrichtung (20) eine Zugangstür zu dem Behälter ist.

## Claims

1. A containment vessel (10) of the glove box type provided with a piece of equipment (20) mechanically secured to a wall (11) of said vessel by means of a first flange (30), said piece of equipment (20) and the first flange (30) hermetically sealing an opening (12) arranged at said wall (11), the first flange (30) comprising a cylindrical section (31), forming a passage (32), provided with a first free edge (33), and with a second edge (34), opposite to the first edge (33), and from which a shoulder (35) extends, the first flange passing through the opening (12) so that the shoulder (35) is held bearing against an inner face of the wall (11), and so that the cylindrical section (31) is projecting outwards of the vessel,
the piece of equipment (20), provided with a second flange (21), passes through the passage (32) and opens into the inside of the vessel, the second flange comprising a second shoulder (21a) clamped bearing against the first edge (33).

2. The vessel according to claim 1, wherein the clamped holding of the second flange against the first edge (33) is ensured by a clamping ring (50).

3. The vessel according to claim 2, wherein the clamping ring is screwed around the piece of equipment (20) inside the containment vessel (10).

4. The vessel according to claim 3, wherein the clamping ring bears against the second edge (34).

5. The vessel according to one of claims 1 to 4, wherein a seal (40) is interposed between the first edge (33) and the second shoulder (21a).

6. The vessel according to one of claims 1 to 5, wherein holding of the first flange (30) to the wall (11) is achieved by a weld bead formed at the shoulder (35).

7. The vessel according to one of claims 1 to 6, wherein the cylindrical section (31) comprises an outer surface on which two circumferential grooves are formed.

8. The vessel according to one of claims 1 to 7, wherein the piece of equipment (20) is a hatch for access to said vessel.
